# EUROPÄISCHE PATENTSCHRIFT

(11) **EP 2 084 321 B1**
(45) Veröffentlichungstag und Bekanntmachung des Hinweises auf die Patenterteilung: **02.01.2013**
(21) Anmeldenummer: 07821709.8
(22) Anmeldetag: 23.10.2007
(51) Int. Cl.: D06M 13/17, D06P 1/613, C08K 5/053, C08K 5/06, C08K 5/10, B01F 17/00, C09B 67/00

(54) **VERFAHREN ZUM BEHANDELN VON SUBSTRATEN**
METHOD FOR THE TREATMENT OF SUBSTRATES
PROCÉDÉ DE TRAITEMENT DE SUBSTRATS

(30) Priorität: 25.10.2006 EP 06122931; 10.05.2007 EP 07107938
(43) Veröffentlichungstag der Anmeldung: 05.08.2009
(73) Patentinhaber: BASF SE, 67056 Ludwigshafen (DE)
(72) Erfinder: SIEMENSMEYER, Karl, 67227 Frankenthal (DE); MÜLLER, Johann, 67551 Worms (DE); KUHN, Stefan, 67227 Frankenthal (DE); WEIGERT, Karl-Heinz, 67434 Neustadt (DE); ELIZALDE, Oihana, 68159 Mannheim (DE)
(86) Internationale Anmeldenummer: PCT/EP2007/061345
(87) Internationale Veröffentlichungsnummer: WO 2008/049838

(56) Entgegenhaltungen:
- EP-A- 0 064 225
- DE-A1- 2 114 609
- DE-A1- 2 343 198

## Beschreibung

Die vorliegende Erfindung betrifft die Verwendung von Verbindungen der allgemeinen Formel I 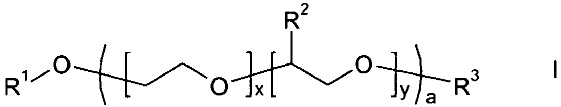 in wässrigen Bindemittel-haltigen Formulierungen, gewählt aus Druckpasten, die ein oder mehrere Pigmente enthalten, Beschichtungsmitteln und Färbeflotten, wobei die Variablen wie folgt definiert sind:
- R¹: gewählt aus C₁-C₂₀-Alkyl, gradkettig oder verzweigt, oder CO-C₁-C₁₉-Alkyl oder CO-C₂-C₁₉-Alkenyl, gradkettig oder verzweigt,
- R²: gleich oder verschieden und gewählt aus C₁-C₃-Alkyl,
- R³: gewählt aus C₁-C₂₀-Alkyl, gradkettig oder verzweigt, oder CO-C₁-C₁₉-Alkyl oder CO-C₂-C₁₉-Alkenyl, gradkettig oder verzweigt

- x: eine Zahl im Bereich von 3 bis 20,
- y: eine Zahl im Bereich von 1 bis 20,
- a: eine Zahl im Bereich von 1 bis 3.

Weiterhin betrifft die vorliegende Erfindung wässrige Bindemittel-haltige Formulierungen, enthaltend Verbindungen der allgemeinen Formel I. weiterhin betrifft die vorliegende Erfindung ein Verfahren zum Behandeln von Substraten, insbesondere Textil, unter Verwendung von erfindungsgemäßen wässrigen Bindemittel-haltigen Formulierungen. Weiterhin betrifft die vorliegende Erfindung Substrate, die nach dem erfindungsgemäßen Verfahren behandelt sind.

Bei zahlreichen Behandlungsmethoden für Substrate wie Textil trägt man wässrige Formulierungen auf, die ein oder mehrere Bindemittel enthalten. Genannt seien dabei beispielsweise das Bedrucken mit Druckpasten oder Färbeflotten, im Falle von Textil insbesondere Klotzflotten, oder die Beschichtung von Textil. Weiterhin sei die Auftragung von Vliesbindern auf Vliese genannt.

Beim Behandeln von Substraten, insbesondere von Textil, verwendet man in vielen Fällen wässrige Bindemittel-haltige Formulierungen. Beim Bedrucken von Textil können derartige wässrige Formulierungen beispielsweise Druckpasten sein. Nach dem eigentlichen Behandeln schließt man üblicherweise eine thermische Behandlung an, die aus einem oder mehreren Schritten bestehen kann und die üblicherweise mindestens einen Schritt enthält, der in einem Trockenschrank oder Trockenaggregat durchgeführt wird. In vielen Fällen beobachtet man jedoch, dass die behandelten Substrate nach der thermischen Behandlung Flecken aufweisen, obwohl sie vor dem thermischen Behandeln noch vollkommen fleckenfrei wirken. Diese Flecken enthalten in vielen Fällen eine Anreicherung von Weichmacher.

Damit die bedruckten Substrate einen angenehmen Griff aufweisen, setzt man vielen wässrigen Bindemittel-haltigen Formulierungen einen oder mehrere Weichmacher zu. Derartige Weichmacher sind in vielen Fällen Ester, insbesondere Alkylester von Dicarbonsäuren wie beispielsweise Adipinsäure oder Terephthalsäure. Dabei können die Alkylreste aus verschiedensten Alkylresten gewählt werden, geradkettig und verzweigt, unsubstituiert oder substituiert. Man beobachtet jedoch in vielen Fällen, dass sich in mindestens einem Trockenschrank oder Trockenaggregat, meistens in demjenigen Trockenschrank oder Trockenaggregat, in dem man den ersten (bzw. den einzigen) Schritt der thermischen Behandlung durchführt, Ablagerungen bilden, die sich bei näherer Analyse als Reste von Weichmacher oder deren Zersetzungsprodukten herausstellen. Weiterhin findet man Anreicherungen von Weichmachern in den Flecken von den bedruckten und thermisch behandelten Substraten. Derartige Flecken sind nicht nur ästhetisch unattraktiv, sondern können auch die Echtheiten wie beispielsweise die Reibechtheiten vermindern.

Es bestand also die Aufgabe, wässrige Bindemittel-haltige Formulierungen bereit zu stellen, mit deren Hilfe man Substrate behandeln kann, die einerseits weniger Flecken aufweisen, andererseits aber einen angenehmen Griff und gute Echtheiten wie beispielsweise Reibechtheiten aufweisen. Weiterhin bestand die Aufgabe, ein Verfahren zum Behandeln von Substraten bereit zu stellen, mit dessen Hilfe sich Substrate herstellen lassen, die einerseits weniger Flecken aufweisen, andererseits aber einen angenehmen Griff und gute Echtheiten wie beispielsweise Reibechtheiten aufweisen. Weiterhin bestand die Aufgabe, eine Verwendung von bestimmten Verbindungen in wässrigen Bindemittel-haltigen Formulierungen bereit zu stellen. Schließlich bestand die Aufgabe, behandelte Substrate mit vorstehend geschilderten Eigenschaften bereit zu stellen.

Dementsprechend wurde die eingangs definierte Verwendung gefunden. Die eingangs definierte Verwendung betrifft Verbindungen der allgemeinen Formel I, 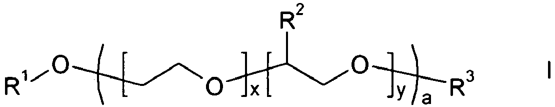 wobei die Variablen wie folgt definiert sind:
- R¹: gewählt aus C₁-C₂₀-Alkyl, beispielsweise C₁-C₁₀-Alkyl, bevorzugt C₁₀-C₁₈-Alkyl, besonders bevorzugt C₁₃-C₁₅-Alkyl, gradkettig oder verzweigt, unsubstituiert oder vorzugsweise ein- oder mehrfach substituiert mit Hydroxylgruppen oder Ketogruppen, beispielsweise
beispielsweise Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, n-Octyl, 2-Ethylhexyl, n-Nonyl, n-Decyl;
bevorzugt n-Decyl, iso-Decyl, n-Undecyl, iso-Undecyl, n-Dodecyl, iso-Dodecyl, n-Tridecyl, iso-Tridecyl, n-Tetradecyl, iso-Tetradecyl, Triisobutenyl, Tetraisobutenyl, n-Pentadecyl, iso-Pentadecyl, n-Hexadecyl, iso-Hexadecyl, n-Heptadecyl, iso-Heptadecyl, n-Octadecyl, iso-Octadecyl, besonders bevorzugt C₁₃-C₁₅-Alkyl, beispielsweise n-Tridecyl, iso-Tridecyl, n-Tetradecyl, iso-Tetradecyl, n-Pentadecyl, iso-Pentadecyl,
oder CO-C₁-C₁₉-Alkyl, bevorzugt CO-C₁₀-C₁₉-Alkyl, gradkettig oder verzweigt, beispielsweise Acetyl (CO-CH₃), Propionyl (CO-C₂H₅), n-Butyryl (CO-n-C₃H₇), iso-Butyryl, n-Valeroyl (CO-n-C₄H₉), CO-n-C₁₀H₂₁,
bevorzugt CO-n-C₁₁H₂₃, CO-iso-C₁₁H₂₃, CO-n-C₁₃H₂₇, CO-iso-C₁₃H₂₇, CO-n-C₁₅H₃₁, CO-iso-C₁₅H₃₁, CO-n-C₁₇H₃₅, CO-iSO-C₁₇H₃₅, CO-n-C₁₉H₃₉, CO-ISO-C₁₉H₃₉, bevorzugt sind Laurylreste (CO-n-C₁₁H₂₃), Myristylreste (CO-n-C₁₃H₂₅), Palmityl (CO-n-C₁₅H₃₁) und Stearylreste (CO-n-C₁₇H₃₄),
oder CO-C₂-C₁₉-Alkenyl, verzweigt oder bevorzugt gradkettig, beispielsweise Meth)acryl, insbesondere Carboxylreste, die von Ölsäure (cis-9-Octadecensäure), Linolsäure (cis,cis-9,12-Octadecadiensäure) oder Linolensäure (all-cis-9,12,15-Octadecatriensäure) abgeleitet sind,
- R²: gleich oder verschieden und gewählt aus C₁-C₃-Alkyl, beispielsweise Ethyl, n-Propyl, iso-Propyl und insbesondere Methyl,
- R³: gewählt aus C₁-C₂₀-Alkyl, beispielsweise n-Decyl, iso-Decyl, n-Undecyl, iso-Undecyl, n-Dodecyl, iso-Dodecyl, n-Tridecyl, iso-Tridecyl, n-Tetradecyl, iso-Tetradecyl, Triisobutenyl, Tetraisobutenyl, n-Pentadecyl, iso-Pentadecyl, n-Hexadecyl, iso-Hexadecyl, n-Heptadecyl, iso-Heptadecyl, n-Octadecyl, iso-Octadecyl, n-Eicosyl, bevorzugt C₁-C₈-Alkyl, verzweigt oder vorzugsweise geradkettig, beispielsweise Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, n-Octyl, 2-Ethylhexyl, besonders bevorzugt C₁-C₄-Alkyl wie Methyl, Ethyl, n-Propyl, iso-Propyl, n-Butyl, iso-Butyl, sec.-Butyl und tert.-Butyl, ganz besonders bevorzugt Ethyl und noch mehr bevorzugt Methyl,
oder CO-C₁-C₁₉-Alkyl, gradkettig oder verzweigt, beispielsweise CO-CH₃ (Acetyl), CO-C₂H₅ (Propionyl), CO-n-C₃H₇ (Butyryl), CO-iso-C₃H₇ (iso-Butyryl), CO-n-C₅H₁₁ (Valeroyl), CO-iso-C₅H₁₁ (iso-Valeroyl), oder Stearoyl,
oder CO-C₂-C₁₉-Alkenyl, verzweigt oder bevorzugt gradkettig, beispielsweise Meth)acryl, insbesondere Carboxylreste, die von Ölsäure (cis-9-Octadecensäure), Linolsäure (cis,cis-9,12-Octadecadiensäure) oder Linolensäure (all-cis-9,12,15-Octadecatriensäure) abgeleitet sind,
- x: eine Zahl im Bereich von 3 bis 20, bevorzugt 3 bis 10
- y: eine Zahl im Bereich von 1 bis 20, bevorzugt 1 bis 10 und besonders bevorzugt bis fünf,
- a: eine Zahl im Bereich von 1 bis 3, vorzugsweise eine ganze Zahl im Bereich von 1 bis 3 und besonders bevorzugt 1.

Dabei können R¹ und R³ jeweils gleich oder verschieden sein.

In einer bevorzugten Ausführungsform der vorliegenden Erfindung wird für den Fall, dass R¹ aus CO-C₁-C₁₉-Alkyl oder CO-C₂-C₁₉-Alkenyl gewählt wird, R³ aus CO-C₁-C₁₉-Alkyl gewählt.

In einer anderen bevorzugten Variante der vorliegenden Erfindung wird für den Fall, dass R¹ aus CO-C₁-C₁₉-Alkyl oder CO-C₂-C₁₉-Alkenyl gewählt wird, R³ aus C₁-C₂₀-Alkyl und insbesondere C₁-C₈-Alkyl gewählt.

In einer Ausführungsform der vorliegenden Erfindung sind in Verbindungen der allgemeinen Formel I die Variablen wie folgt gewählt:
- R¹: gewählt aus C₁₀-C₁₈-Alkyl, gradkettig oder verzweigt,
- R²: gleich oder verschieden und gewählt aus C₁-C₃-Alkyl,
- R³: gewählt aus C₁-C₈-Alkyl, gradkettig oder verzweigt,
- x: eine Zahl im Bereich von 3 bis 20,
- y: eine Zahl im Bereich von 1 bis 20,
- a: eine Zahl im Bereich von 1 bis 3.

Die Herstellung von Verbindungen der allgemeinen Formel I ist an sich bekannt und gelingt beispielsweise durch ein Mehrstufenverfahren, zu dessen Ausübung man zunächst einen Alkohol (oder ein Gemisch von Alkoholen) der Formel R¹-OH ethoxyliert, beispielsweise mit Hilfe eines sauren oder basischen Katalysators, danach mit einer Verbindung der allgemeinen Formel II umsetzt, 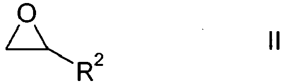 in der R² wie vorstehend definiert ist, und schließlich mit einem Alkohol der Formel R³-OH verethert oder mit einem anderen Alkylierungsmittel, das Reste R³ übertragen kann, umsetzt.

In einer anderen Ausführungsform der vorliegenden Erfindung gelingt die Herstellung von Verbindungen der allgemeinen Formel I nach einem Mehrstufenverfahren, zu dessen Ausübung man zunächst eine Fettsäure (oder ein Gemisch von Fettsäuren) der Formel R¹-OH mit (R¹ gewählt aus CO-C₁-C₁₉-Alkyl oder CO-C₂-C₁₉-Alkenyl) bzw. ein geeignetes Derivat, beispielsweise den korrespondierenden Methyl- oder Ethylester, ethoxyliert, beispielsweise mit Hilfe eines sauren oder basischen Katalysators, danach mit einer Verbindung der allgemeinen Formel II umsetzt, und schließlich mit einer Carbonsäure der Formel R³-OH (mit R³ gewählt aus CO-C₁-C₁₉-Alkyl) verestert oder mit einem anderen Acylierungsmittel, das Reste R³ übertragen kann, umsetzt.

In einer anderen Ausführungsform der vorliegenden Erfindung gelingt die Herstellung von Verbindungen der allgemeinen Formel I dadurch, dass man eine Carbonsäure der allgemeinen Formel R¹-OH (mit R¹ gewählt aus CO-C₁-C₁₉-Alkyl oder CO-C₂-C₁₉-Alkenyl) oder ein geeignetes Derivat, beispielsweise den korrespondierenden Methyl- oder Ethylester, mit einem einfach verkappten Polyalkylenoxid der Formel HO(CH₂CH₂O)ₓ(CHR²CH₂O)_{y}-R³ umsetzt, wobei R³ gewählt wird aus C₁-C₂₀-Alkyl und insbesondere C₁-C₈-Alkyl).

Aufgrund des Herstellprozesses fallen Verbindungen der allgemeinen Formel I üblicherweise als Gemische an, so dass - auf das Gemisch bezogen - x und y als Mittelwerte auch jeweils den Wert einer nicht-ganzen Zahl annehmen können, während für die Einzelverbindung x und y natürlich den Wert einer ganzen Zahl haben. Im Rahmen der vorliegenden Erfindung wird unter einer Verbindung der allgemeinen Formel I jeweils das Gemisch verstanden, das erfindungsgemäß verwendet wird.

In einer Ausführungsform der vorliegenden Erfindung werden wässrige Bindemittel-haltige Formulierungen gewählt aus Färbeflotten, Beschichtungsmitteln, Vliesbindern und insbesondere aus Druckpasten, beispielsweise für den Textildruck.

Unter Färbeflotten, insbesondere für den Klotzprozess, werden im Zusammenhang mit der vorliegenden Erfindung wässrige Bindemittel-haltige Formulierungen verstanden, die mindestens ein Pigment enthalten und die man beispielsweise durch den Klotzprozess auf Substrate, insbesondere auf Textil aufbringt und danach thermisch behandelt.

Färbeflotten im Sinne der vorliegenden Erfindung können einen oder mehrere Zusätze enthalten, beispielsweise Netzmittel, Entlüfter, Antimigrationsmittel, Griffverbesserer und Vernetzer.

Geeignete Netzmittel, die auch als Emulgatoren wirken können, sind beispielsweise nichtionische, anionische oder kationische Tenside, insbesondere Ethoxylierungs- und/oder Propoxylierungsprodukte von Fettalkoholen oder Propylenoxid-Ethylenoxid-Blockcopolymere, weiterhin Ethoxylate von Ölsäure oder Alkylphenolen, Alkylphenolethersulfate, Alkylpolyglycoside, Alkylphosphonate, Alkylphenylphosphonate, Alkylphosphate, oder Alkylphenylphosphate.

Trockene textile Gewebe, Garne, Filamente, Gewirke oder Vliese, wie sie in der kontinuierlichen Pigmentfärbung eingesetzt werden, enthalten eine große Menge von Luft. Daher ist der Einsatz von Entlüftern vorteilhaft. Diese basieren beispielsweise auf Polyethersiloxan-Copolymeren. Sie können in Mengen von 0,01 bis 2 g/l in den erfindungsgemäßen Färbeflotten enthalten sein.

Weiterhin können Färbeflotten Antimigrationsmittel enthalten. Geeignete Antimigrationsmittel sind beispielsweise Blockcopolymerisate von Ethylenoxid und Propylenoxid mit Molekulargewichten Mₙ im Bereich von 500 bis 5000 g/mol, bevorzugt 800 bis 2000 g/mol.

Weiterhin kann man Färbeflotten als Zusatz einen oder mehrere Griffverbesserer zusetzen. Hierbei handelt es sich in der Regel um Polysiloxane oder um Wachse. Polysiloxane haben hierbei den Vorteil der Permanenz, während die Wachse langsam während des Gebrauchs ausgewaschen werden.

Erfindungsgemäße Färbeflotten können einen oder mehrere Vernetzer enthalten, beispielsweise Kondensationsprodukte von mindestens einer Aminogruppenhaltigen Verbindung und mindestens einem Aldehyd oder Dialdehyd und gegebenenfalls mindestens einem Alkohol, insbesondere N,N'-Dimethylol-4,5-dihydroxyethylenharnstoff ("DMDHEU") sowie Veretherungsprodukte von DMDHEU mit einem oder mehreren Äquivalenten C₁-C₄-Alkanol oder mit einem oder mehreren Äquivalenten Ethylenglykol, Diethylenglykol, Triethylenglykol oder Polyethylenglykol, Dimere von DMDHEU, DMeDHEU. Weitere geeignete Vernetzer sind Triisocyanurate auf Basis von aliphatischen Diisocyanaten, insbesondere das Triisocyanurat von Hexamethylendiisocyanat (HDI), sowie mit beispielsweise Mono-C1-C4-alkylethern von Di-, Tri- oder Polyethylenglykol hydrophil modifizierte Triisocyanurate, insbesondere von aliphatischen Diisocyanaten wie HDI.

Erfindungsgemäße Färbeflotten weisen üblicherweise einen schwach sauren pH-Wert auf, vorzugsweise im Bereich von 4 bis 6,5, oder einen schwach alkalischen pH-Wert, beispielsweise im Bereich von 7,1 bis 9,5, eingestellt beispielsweise mit Ammoniak. Die Viskositäten von erfindungsgemäßen Färbeflotten liegen bevorzugt im Bereich von unter 100 mPa·s. Die Oberflächenspannungen von Färbeflotten sind so einzustellen, dass ein Benetzen der Ware möglich ist. Geeignet sind beispielsweise Oberflächenspannungen von kleiner 50 mN/m bei 23°C.

In einer Ausführungsform der vorliegenden Erfindung enthält eine typische erfindungsgemäße Färbeflotte pro Liter
0 bis 500 g, bevorzugt 10 bis 200 g an Bindemittel,
0 bis 100 g, bevorzugt 0,1 bis 10 g Netzmittel,
0 bis 100 g, bevorzugt 0,1 bis 10 g Entschäumer,
0 bis 100 g, bevorzugt 1 bis 50 g Antimigrationsmittel,
0 bis 100 g, bevorzugt 1 bis 50 g Egalisiermittel,
0,005 bis 25 g, bevorzugt 0,01 bis 12 g Pigment,
0,5 bis 20 g, bevorzugt bis 15 g, besonders bevorzugt 1 bis 10 g Verbindung der allgemeinen Formel I.

Beschichtungsmittel im Sinne der vorliegenden Erfindung dienen dem dauerhaften Auftragen von Stoffen, vorzugsweise synthetischen oder natürlichen organischen Polymeren, auf vorzugsweise textiles Substrat, siehe beispielsweise Substrat- und Textilbeschichtung, Praxiswissen für Textil-, Bekleidungs- und Beschichtungsbetriebe, Andreas Giessmann, Springer-Verlag Berlin Heidelberg 2003). Je nach Ausgestaltung des Verfahrens kann man den Stoff, bevorzugt das oder die synthetischen oder natürlichen organischen Polymeren, formuliert als Paste, Dispersion, Emulsion, Plastisol, Organisol oder Schmelze auf vorzugsweise textiles Substrat auftragen. Man trägt mittels eines Auftragssystems auf, beispielsweise Foulard, Walzenrakel, Luftrakel, Gummituchrakel, Stützrakel, Tischrakel, Spiralrakel, Kastenrakel, Kommabar, Reverse-Roll-Coater, Contra-Coater, Roll-Coater und Raster Roller, Kiss-Coater, Rotationssiebdruck, Pulverbeschichtung, Spritzen, Tauchen und Imprägnieren, Punkt- und Doppelpunktbeschichtung, Schaumbeschichtung. Der Zweck einer Beschichtung bzw. einer Kaschierung können ästhetische oder funktionelle Gründe sein.

Ausrüstungsverfahren im Sinne der vorliegenden Erfindung gehören zu den Veredlungsprozessen, deren Ziel ist es, z. B. vorbehandelte (gebleichte), gefärbte oder bedruckte Substrate in einen verkaufs- und konfektionsfähigen Zustand zu bringen. Man unterscheidet zwischen mechanischen, nicht permanenten und waschpermanenten Ausrüstungsverfahren, bei denen meist bahnenförmige Web- oder Maschenware kontinuierlich behandelt wird. Der wichtigste Teil ist die chemische Ausrüstung, die auch als Hochveredlung oder Pflegeleichtausrüstung bezeichnet wird. Unter den Begriff Hochveredlung fallen beispielsweise Bügelfrei-, Knitterfrei-, Krumpffrei-, Easy-care- und Wash-and-wear-Ausrüstung. Hochveredlungsmittel sind Chemikalien, die mit sich selbst reagieren und z.B. die Cellulose-Moleküle zumindest partiell vernetzen. Beispiele für Hochveredlungsmittel sind N,N'-Dimethylol-4,5-dihydroxyethylenharnstoff ("DMDHEU") sowie Veretherungsprodukte von DMDHEU mit einem oder mehreren Äquivalenten C₁-C₄-Alkanol oder mit einem oder mehreren Äquivalenten Ethylenglykol, Diethylenglykol, Triethylenglykol oder Polyethylenglykol, Dimere von DMDHEU, DMeDHEU.

Wünscht man die Beschichtung, also das Behandeln mit einem Beschichtungsmittel, als Schaumbeschichtung auszuführen, so setzt man Beschichtungsmitteln mindestens ein Aufschäummittel zu. Besonders geeignet sind Mischungen von Ammoniumstearat + 1,3-Bis(2,6-Dimethylphenoxy)-2-propanol x 18 Ethylenoxid, beispielsweise in einem Mischungsverhältnis von 1:1 (Gewichtsanteile).

Unter Druckpasten werden im Rahmen der vorliegenden Erfindung vorzugsweise wässrige Zubereitungen verstanden, die eine viskose Konsistenz haben. Die dynamische Viskosität von erfindungsgemäß eingesetzten Druckpasten kann beispielsweise bei 20°C im Bereich von 50 bis 150 dPa·s liegen, bevorzugt 60 bis 100 dPa·s, in einer anderen Ausführungsform im Bereich von 10 bis 55 dPa·s, bestimmt beispielsweise nach DIN iso 2555.

Druckpasten im Sinne der vorliegenden Erfindung können ein oder mehrere Farbmittel enthalten, bevorzugt ein oder mehrere Pigmente.

Unter Pigmenten sind im Rahmen der vorliegenden Erfindung praktisch nicht lösliche, dispergierte feinteilige, organische oder anorganische Farbmittel gemäß der Definition in DIN 55944 zu verstehen. Geeignete Pigmente können anorganische Pigmente sein. Weitere geeignete Pigmente sind gewählt aus Ruß, der modifiziert oder nicht modifiziert sein kann.

### Beispielhaft ausgewählte anorganische Pigmente sind

Zinkoxid, Zinksulfid, Lithopone, Bleiweiß, Bleisulfat, Kreide, Titandioxid; Eisenoxidgelb, Cadmiumgelb, Nickeltitangelb, Chromtitangelb, Chromgelb, Bleichromat, Bismutvanadat, Neapelgelb oder Zinkgelb Ultramarinblau, Kobaltblau, Manganblau, Eisenblau, Ultramaringrün, Kobaltgrün, Chromoxid (Chromoxidgrün); Ultramarinviolett, Kobaltviolett, Manganviolett; Ultramarinrot, Molybdatrot, Chromrot, Cadmiumrot; Eisenoxidbraun, Chromeisenbraun, Zinkeisenbraun, Mangantitanbraun; Eisenoxidschwarz, Eisen-Mangan-Schwarz, Spinellschwarz, Ruß; orangefarbene Spinelle und Korunde, Cadmiumorange, Chromorange, Bleimolybdat; Aluminium oder Cu/Zn-Legierung.

Bevorzugt sind Ruß, Eisenoxidpigmente wie beispielsweise Eisenoxidgelb, Eisenoxidbraun und Eisenoxidschwarz, Zinkoxid und Titandioxid.

Bevorzugt wählt man Pigmente aus organischen Pigmenten oder Metallpigmenten aus.

Beispielhaft ausgewählte organische Pigmente sind

Monoazopigmente: C.I. Pigment Brown 25; C.I. Pigment Orange 5, 13, 36 und 67; C.I. Pigment Red 1, 2, 3, 5, 8, 9, 12, 17, 22, 23, 31,48:1,48:2,48:3,48:4,49,49:1,52:1, 52:2, 53, 53:1, 53:3, 57:1, 63, 112, 146, 170, 184, 210, 245 und 251; C.I. Pigment Yellow 1, 3, 73, 74, 65, 97, 151 und 183;

Disazopigmente: C.I. Pigment Orange 16, 34 und 44; C.I. Pigment Red 144, 166, 214 und 242; C.I. Pigment Yellow 12, 13, 14, 16, 17, 81, 83, 106, 113, 126, 127, 155, 174, 176 und 188;
Anthanthronpigmente: C.I. Pigment Red 168 (C.I. Vat Orange 3);

Anthrachinonpigmente: C.I. Pigment Yellow 147 und 177; C.I. Pigment Violet 31;
Anthrachinonpigmente: C.I. Pigment Yellow 147 und 177; C.I. Pigment Violet 31;
Anthrapyrimidinpigmente: C.I. Pigment Yellow 108 (C.I. Vat Yellow 20);
Chinacridonpigmente: C.I. Pigment Red 122, 202 und 206; C.I. Pigment Violet 19;
Chinophthalonpigmente: C.I. Pigment Yellow 138;
Dioxazinpigmente: C.I. Pigment Violet 23 und 37;
Flavanthronpigmente: C.I. Pigment Yellow 24 (C.I. Vat Yellow 1);
Indanthronpigmente: C.I. Pigment Blue 60 (C.I. Vat Blue 4) und 64 (C.I. Vat Blue 6);
Isoindolinpigmente: C.I. Pigment Orange 69; C.I. Pigment Red 260; C.I. Pigment Yellow 139 und 185;
Isoindolinonpigmente: C.I. Pigment Orange 61; C.I. Pigment Red 257 und 260; C.I. Pigment Yellow 109,110, 173 und 185;
Isoviolanthronpigmente: C.I. Pigment Violet 31 (C.I. Vat Violet 1);
Metallkomplexpigmente: C.I. Pigment Yellow 117, 150 und 153; C.I. Pigment Green 8; Perinonpigmente: C.I. Pigment Orange 43 (C.I. Vat Orange 7); C.I. Pigment Red 194 (C.I. Vat Red 15);
Perylenpigmente: C.I. Pigment Black 31 und 32; C.I. Pigment Red 123, 149, 178, 179 (C.I. Vat Red 23), 190 (C.I. Vat Red 29) und 224; C.I. Pigment Violet 29; Phthalocyaninpigmente: C.I. Pigment Blue 15, 15:1, 15:2, 15:3, 15:4, 15:6 und 16; C.I. Pigment Green 7 und 36;
Pyranthronpigmente: C.I. Pigment Orange 51; C.I. Pigment Red 216 (C.I. Vat Orange 4);
Thioindigopigmente: C.I. Pigment Red 88 und 181 (C.I. Vat Red 1); C.I. Pigment Violet 38 (C.I. Vat Violet 3);
Triarylcarboniumpigmente: C.I. Pigment Blue 1, 61 und 62; C.I. Pigment Green 1; C.I. Pigment Red 81, 81:1 und 169; C.I. Pigment Violet 1, 2, 3 und 27; C.I. Pigment Black 1 (Anilinschwarz); C.I. Pigment Yellow 101 (Aldazingelb), C.I. Pigment Brown 22.

Beispiele für besonders bevorzugte Pigmente sind: C.I. Pigment Yellow 138, C.I. Pigment Red 122, C.I. Pigment Violet 19, C.I. Pigment Blue 15:3 und 15:4, C.I. Pigment Black 7, C.I. Pigment Orange 5, 38 und 43 und C.I. Pigment Green 7.

Weitere geeignete Pigmente sind metallische Pigmente wie beispielsweise Goldbronze, Silberbronze, Iriodinpigmente, Glitter.

Der mittlere Durchmesser von Pigmenten in Druckpasten liegt üblicherweise im Bereich von 20 nm bis 1,5 µm, bevorzugt im Bereich von 100 bis 300 nm.

In einer Ausführungsform der vorliegenden Erfindung liegt Pigment in sphärischer oder annährend sphärischer partikulärer Form vor, d.h. das Verhältnis längster Durchmesser zu kleinstem Durchmesser liegt im Bereich von 1,0 bis 2,0, bevorzugt bis 1,5.

Pigment fügt man Druckpasten im Sinne der vorläufigen Erfindung vorzugsweise in Form von Pigmentzubereitungen zu. Pigmentzubereitungen enthalten üblicherweise 20 bis 60 Gew.-% Pigment, weiterhin Wasser und eine oder mehrere oberflächenaktive Verbindungen, beispielsweise einen oder mehrere Emulgatoren, beispielhaft seien mehrfach alkoxylierte C₁₀-C₃₀-Alkanole genannt.

Druckpasten im Sinne der vorliegenden Erfindung können weiterhin mindestens einen Verdicker (auch Verdickungsmittel genannt) enthalten, bevorzugt sind wässrige Verdicker. Als Verdicker können natürliche oder synthetische Verdicker eingesetzt werden. Bevorzugt ist der Einsatz von synthetischen Verdickern, beispielsweise von im Allgemeinen flüssigen Lösungen von synthetischen Polymeren in beispielsweise Weißöl oder als wässrige Lösungen. Die synthetischen Polymere enthalten Säuregruppen, die vollständig oder zu einem gewissen Prozentsatz mit Ammoniak neutralisiert werden. Beim Fixierprozess wird Ammoniak freigesetzt, wodurch der pH-Wert gesenkt wird und die eigentliche Fixierung beginnt. Das für die Fixierung notwendige Absenken des pH-Wertes kann alternativ durch Zusatz von nichtflüchtigen Säuren wie z.B. Zitronensäure, Bernsteinsäure, Glutarsäure oder Äpfelsäure erfolgen. Geeignet sind auch Hydrogenphosphate und Dihydrogenphosphate, beispielsweise Diammoniumhydrogenphosphat.

Insbesondere können Druckpasten im Sinne der vorliegenden Erfindung 20 bis 40 Gew.-% Weißöl enthalten. Wässrige Verdicker enthalten üblicherweise bis zu 25 Gew.-% Polymer. Wünscht man wässrige Formulierungen eines Verdickers einzusetzen, so setzt man im Allgemeinen wässriges Ammoniak zu. Auch der Einsatz granulärer, fester Formulierungen eines Verdickers ist denkbar, um Emissions-frei Pigmentdrucke herstellen zu können.

Beispiele für besonders bevorzugte synthetische Verdicker sind Copolymere mit 85 bis 95 Gew.-% Acrylsäure, 4 bis 14 Gew.-% Acrylamid und 0,01 bis maximal 1 Gew.-% des (Meth)acrylamidderivats der Formel III 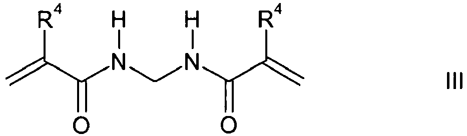 mit Molekulargewichten M_{w} im Bereich von 100.000 bis 2.000.000 g/mol, in denen R⁴ gewählt wird aus Methyl und insbesondere Wasserstoff.

Bindemittel im Sinne der vorliegenden Erfindung sind emulgierte oder dispergierte filmbildende Polymere, die auch Copolymere mit einschließen. Als Bindemittel kann man sowohl Dispersionen, Emulsionen als auch Organisole von (Co)polymeren wie beispielsweise Polyacrylaten, Polyurethanen, Polybutadien, Polyolefinen wie Polyethylen oder Polypropylen und deren Copolymere verwenden. Bevorzugt sind Dispersionen oder Emulsionen von Polyacrylaten oder Polyurethanen.

Geeignete Polyacrylate, die als Bindemittel im Sinne der vorliegenden Erfindung bevorzugt zu nennen sind, sind solche Copolymerisate, insbesondere Emulsionscopolymerisate von mindestens einer einfach ethylenisch ungesättigten Carbonsäure oder Dicarbonsäure wie beispielsweise Maleinsäure, Fumarsäure, Crotonsäure, Itaconsäure oder bevorzugt (Meth)acrylsäure mit mindestens einem Comonomer wie beispielsweise mindestens einem C₁-C₁₀-Alkylester von mindestens einer einfach ethylenisch ungesättigten Carbonsäure oder Dicarbonsäure, insbesondere seien Methyl(meth)acrylat, Ethylacrylat, n-Butylacrylat und 2-Ethylhexylacrylat genannt, und/oder mindestens einem weiteren Comonomer, gewählt aus beispielsweise Vinylaromaten, beispielsweise para-Methylstyrol, α-Methylstyrol und insbesondere Styrol, und stickstoffhaltigen Comonomeren wie (Meth)acrylamid, (Meth)acrylnitril.

In einer Ausführungsform der vorliegenden Erfindung enthalten Polyacrylate, die als Bindemittel geeignet sind, mindestens ein reaktives Comonomer einpolymerisiert, gewählt aus Glycidyl(meth)acrylat, Acetoacetyl(meth)acrylat und N-Methylol-(meth)acrylamid.

Geeignete Polyurethane, die als Bindemittel im Sinne der vorliegenden Erfindung bevorzugt zu nennen sind, sind hydroxylterminierte Polyurethane, die durch Reaktion von mindestens einem Polyesterol, beispielsweise einem Kondensationsprodukt einer aliphatischen Dicarbonsäure wie Bernsteinsäure, Glutarsäure und insbesondere Adipinsäure mit mindestens einem aliphatischen Diol, beispielsweise 1,6-Hexandiol, 1,4-Butandiol, Neopentylglykol, Ethylenglykol oder Diethylenglykol, und einem Diisocyanat oder Polyisocyanat und gegebenenfalls weiteren Reaktionspartnern hergestellt werden können. Geeignete Diisocyanate sind aliphatische, cycloaliphatische und aromatische Diisocyanate, insbesondere Hexamethylendiisocyanat (HDI), Dodecamethylendiisocyanat, 4,4'-Diisocyanatocylohexylmethan (MDI), Cyclohexan-1,4-diisocyanat, Isophorondiisocyanat (IPDI) und aromatische Diisocyanate wie beispielsweise Toluylendiisocyanat (TDI).

Als weitere Reaktionspartner seien beispielsweise Diole, insbesondere 1,4-Butandiol, und Säuregruppenhaltige Moleküle, insbesondere Säuregruppenhaltige Diole und Säuregruppenhaltige Diamine genannt, z. B. 3,3-Dihydroxymethylolpropionsäure und die Verbindung der Formel VII.

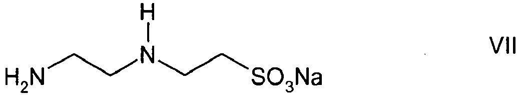

Verbindungen der allgemeinen Formel I lassen sich erfindungsgemäß in wässrigen Bindemittel-haltigen Formulierungen verwenden, mit denen man beliebige Substrate behandeln, bevorzugt beschichten oder insbesondere bedrucken kann, beispielsweise Holz, Papier, Polymerfolien, beispielsweise aus Polyethylen oder Polyester, weiterhin Leder, Kunstleder, Pappe und Kartonagen.

In einer bevorzugten Ausführungsform der vorliegenden Erfindung handelt es sich bei wässrigen Bindemittel-haltigen Formulierungen um Druckpasten und insbesondere um Druckpasten für den Textildruck.

Unter Textil bzw. textilen Substraten sind im Rahmen der vorliegenden Erfindung Textilfasern, textile Halb- und Fertigfabrikate und daraus hergestellte Fertigwaren zu verstehen, die neben Textilien für die Bekleidungsindustrie beispielsweise auch Teppiche und andere Heimtextilien sowie technischen Zwecken dienende textile Gebilde umfassen. Dazu gehören auch ungeformte Gebilde wie beispielsweise Flocken, linienförmige Gebilde wie Bindfäden, Fäden, Garne, Leinen, Schnüre, Seile, Zwirne sowie Körpergebilde wie beispielsweise Filze, Gewebe, Vliesstoffe und Watten. Die Textilien können natürlichen Ursprungs sein, beispielsweise Baumwolle, Wolle oder Flachs, oder synthetisch, beispielsweise Polyamid, Polyester, modifiziertem Polyester, Polyestermischgewebe, Polyamidmischgewebe, Polyacrylnitril, Triacetat, Acetat, Polycarbonat, Polypropylen, Polyvinylchlorid, Polyestermikrofasern und Glasfasergewebe. Vorzugsweise handelt es sich bei Textil im Sinne der vorliegenden Erfindung um flächiges Textil.

In einer Ausführungsform der vorliegenden Erfindung handelt es sich bei Druckpasten um solche, die mindestens ein nichtionisches Tensid enthalten. Gebräuchliche nichtionische Tenside sind z.B. ethoxylierte Mono-, Di- und Tri- C₄-C₁₂-Alkylphenole (Ethoxylierungsgrad: 3 bis 50) sowie ethoxylierte C₈-C₃₆-Fettalkohole (Ethoxylierungsgrad: 3 bis 80). Gebräuchliche nichtionische Tenside sind kommerziell erhältlich beispielsweise als Lutensol^{®}-Marken der BASF Aktiengesellschaft.

In einer Ausführungsform der vorliegenden Erfindung handelt es sich bei wässrigen Bindemittel-haltigen Formulierungen um solche, die frei sind von Alkylestern von Dicarbonsäuren, insbesondere von Di-C₁-C₂₀-Alkylestern von aliphatischen, cycloaliphatischen oder aromatischen Dicarbonsäuren. Aliphatische, cycloalipahtische und aromatische Dicarbonsäuren im Sinne der vorliegenden Erfindung sind beispielsweise Adipinsäure, 1,4-Cyclohexandicarbonsäure und Terephthalsäure. Dicarbonsäuren sollen dabei auch Polycarbonsäuren wie beispielsweise Mellithsäure mit umfassen. Unter Alkylestern von Dicarbonsäuren seien im Rahmen der vorliegenden Erfindung auch niedermolekulare Polyester subsummiert, erhältlich durch Polykondensation von aliphatischer Dicarbonsäure und aliphatischem Diol, beispielsweise Adipinsäure oder Bernsteinsäure und 1,2-Propandiol, vorzugsweise mit einem M_{W} von 200 bis 5000 g/mol.

Unter "frei von Alkylestern von Dicarbonsäuren" sei dabei zu verstehen, dass die betreffenden wässrigen Bindemittel-haltigen Formulierungen weniger als 0,5 Gew.-% Alkylester von Dicarbonsäure enthalten, bevorzugt weniger als 0,1 Gew.-% und besonders bevorzugt weniger als 0,05 Gew.-%, beispielsweise 10 Gew.-ppm bis 100 Gew.-ppm.

Wenn man wie vorstehend beschrieben eine oder mehrere Verbindungen der allgemeinen Formel I in wässrigen Bindemittel-haltigen Formulierungen verwendet, so erhält man in der Regel sehr gut lagerbeständige Formulierungen, mit denen sich Substrate sehr gut behandeln und insbesondere Textil fleckenfrei bedrucken lassen.

Ein weiterer Gegenstand der vorliegenden Erfindung sind wässrigen Bindemittel-haltigen Formulierungen, bevorzugt Druckpasten, enthaltend eine oder mehrere Verbindungen der allgemeinen Formel I 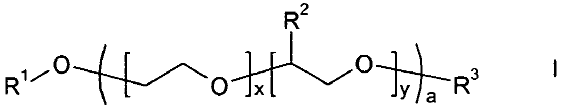 wobei die Variablen wie folgt definiert sind:
- R¹: gewählt aus C₁-C₂₀-Alkyl, bevorzugt C₁₀-C₁₈-Alkyl, besonders bevorzugt C₁₃-C₁₅-Alkyl, gradkettig oder verzweigt, oder CO-C₁-C₁₉-Alkyl oder CO-C₂-C₁₉-Alkenyl, gradkettig oder verzweigt,
- R²: gleich oder verschieden und gewählt aus C₁-C₃-Alkyl, insbesondere Methyl,
- R³: gewählt aus C₁-C₂₀-Alkyl, bevorzugt C₁-C₈-Alkyl, geradkettig oder verzweigt, bevorzugt C₁-C₄-Alkyl, besonders bevorzugt Ethyl und ganz besonders bevorzugt Methyl, oder CO-C₁-C₁₉-Alkyl oder CO-C₂-C₁₉-Alkenyl, gradkettig oder verzweigt,
- x: eine Zahl im Bereich von 3 bis 20, bevorzugt 3 bis 10,
- y: eine Zahl im Bereich von 1 bis 20, bevorzugt bis 10 und besonders bevorzugt bis fünf,
- a: eine Zahl im Bereich von 1 bis 3, vorzugsweise eine ganze Zahl im Bereich von 1 bis 3 und besonders bevorzugt 1, und mindestens ein Pigment.

Dabei gilt zu den Variablen das vorstehend gesagte.

In einer Ausführungsform der vorliegenden Erfindung sind in Verbindungen der allgemeinen Formel I die Variablen wie folgt gewählt:
- R¹: gewählt aus C₁₀-C₁₈-Alkyl, gradkettig oder verzweigt,
- R²: gleich oder verschieden und gewählt aus C₁-C₃-Alkyl,
- R³: gewählt aus C₁-C₈-Alkyl, gradkettig oder verzweigt,
- x: eine Zahl im Bereich von 3 bis 20,
- y: eine Zahl im Bereich von 1 bis 20,
- a: eine Zahl im Bereich von 1 bis 3.

Zahlreiche Ausführungsformen von erfindungsgemäßen wässrigen Bindemittel-haltigen Formulierungen sind vorstehend beschrieben.

Erfindungsgemäße Druckpasten sind vorzugsweise wässrige Zubereitungen, die eine viskose Konsistenz haben. Die dynamische Viskosität von erfindungsgemäßen Druckpasten kann beispielsweise bei 20°C im Bereich von 50 bis 150 dPa·s liegen, bevorzugt 60 bis 100 dPa·s, in einer anderen Ausführungsform im Bereich von 10 bis 55 dPa·s, bestimmt beispielsweise nach DIN iso 2555.

Erfindungsgemäße wässrigen Bindemittel-haltigen Formulierungen, insbesondere Beschichtungsmittel oder Druckpasten, können einen oder mehrere Verdicker (Verdickungsmittel) enthalten. Beispiele für geeignete Verdickungsmittel sind vorstehend genannt. Weitere Beispiele für geeignete Verdickungsmittel sind wasserlösliche Polymerisate von ethylenisch ungesättigten Monomeren, wie sie in WO 05/12378 beschrieben sind.

In einer Ausführungsform der vorliegenden Erfindung enthalten erfindungsgemäße wässrige Bindemittel-haltige Formulierungen, insbesondere Färbeflotten oder Druckpasten, ein oder mehrere Farbmittel, ein oder mehrere Pigmente, wobei Pigmente wie vorstehend definiert sind.

In einer Ausführungsform der vorliegenden Erfindung enthalten erfindungsgemäße wässrige Bindemittel-haltige Formulierungen, insbesondere Druckpasten ein oder mehrere nichtionische Tenside. Beispiele für geeignete nichtionische Tenside sind vorstehend genannt.

In einer Ausführungsform der vorliegenden Erfindung sind erfindungsgemäße wässrige Bindemittel-haltige Formulierungen und insbesondere erfindungsgemäße Druckpasten frei von Alkylestern von Dicarbonsäuren, wobei der Ausdruck "frei von Alkylestern von Dicarbonsäuren" vorstehend erläutert ist.

Erfindungsgemäße wässrige Bindemittel-haltige Formulierungen, insbesondere erfindungsgemäße Druckpasten können neben vorstehend genannten Bestandteilen ein oder mehrere Zusätze enthalten, beispielsweise Echtheitsverbesserer, Griffverbesserer, Entschäumer, Netzmittel, Egalisiermittel, Wasserenthärter wie beispielsweise Komplexbildner, Fixierer (Fixiermittel), Emulagatoren, Wasserrückhaltemittel wie beispielsweise Glycerin oder Harnstoff, Wirkstoffe wie beispielsweise Biozide oder Flammfestmittel.

Geeignete Echtheitsverbesserer sind beispielsweise bei Raumtemperatur flüssige Silikonöle und Polysiloxane. In einer bevorzugten Variante der vorliegenden Erfindung kann man auf den Einsatz von Echtheitsverbesserern verzichten.

Geeignete Entschäumer sind beispielsweise silikonhaltige Entschäumer wie beispielsweise solche der Formel HO-(CH₂)₃-Si(CH₃)[OSi(CH₃)₃]₂, nicht alkoxyliert oder mit bis zu 20 Äquivalenten Alkylenoxid und insbesondere Ethylenoxid alkoxyliert. Auch Silikonfreie Entschäumer sind geeignet wie beispielsweise mehrfach alkoxylierte Alkohole, z.B. Fettalkoholalkoxylate, bevorzugt 2 bis 50-fach ethoxylierte vorzugsweise unverzweigte C₁₀-C₂₀-Alkanole, unverzweigte C₁₀-C₂₀-Alkanole und 2-Ethylhexan-1-ol. Weitere geeignete Entschäumer sind Fettsäure-C₈-C₂₀-alkylester, bevorzugt Stearinsäure-C₁₀-C₂₀-alkylester, bei denen C₈-C₂₀-Alkyl, bevorzugt C₁₀-C₂₀-Alkyl unverzweigt oder verzweigt sein kann.

Geeignete Netzmittel sind beispielsweise nichtionische, anionische oder kationische Tenside, insbesondere Ethoxylierungs- und/oder Propoxylierungsprodukte von Fettalkoholen oder Propylenoxid-Ethylenoxid-Blockcopolymere, ethoxylierte oder propoxylierte Fett- oder Oxoalkohole, weiterhin Ethoxylate von Ölsäure oder Alkylphenolen, Alkylphenolethersulfate, Alkylpolyglycoside, Alkylphosphonate, Alkylphenylphosphonate, Alkylphosphate oder Alkylphenylphosphate.

Geeignete Egalisiermittel sind beispielsweise Blockcopolymerisate von Ethylenoxid und Propylenoxid mit Molekulargewichten Mₙ im Bereich von 500 bis 5000 g/mol, bevorzugt 800 bis 2000 g/mol. Ganz besonders bevorzugt sind Blockcopolymerisate aus Propylenoxid/Ethylenoxid beispielsweise der Formel EO₈PO₇EO₈, wobei EO für Ethylenoxid und PO für Propylenoxid steht.

Geeignete Komplexbildner sind beispielsweise das Tetranatriumsalz der Ethylendiamintetraessigsäure und das Trinatriumsalz der Nitrilotriessigsäure, weiterhin Phosphonate, Phosphate und Polyphosphate von Alkalimetallen.

Beispiele für geeignete Fixierer sind Melaminderivate, die alkoxyliert, alkoxyalkyliert oder zu Halbaminalen umgesetzt sein können, hydrophilierte Isocyanurate, Polyglycidylether mit 2 bis 5 Glycidylgruppen pro Molekül, Carbodiimide, Harnstoff oder Harnstoffderivate, die gegebenenfalls zu Halbaminalen oder Aminalen umgesetzt sein können.

Ganz besonders bevorzugte Fixierer sind Carbodiimide, insbesondere polymere Carbodiimide. Beispiele für polymere Carbodiimide sind erhältlich durch Kondensation bzw. Polykondensation von mindestens einem aromatischen Diisocyanat, beispielsweise 2,4-Toluylendiisocyanat, 4,4'-Diphenylmethandiisocyanat oder 1,7-Naphthylendiisocyanat oder mindestens einem aliphatischen oder cycloaliphatischen Carbodiimid wie beispielsweise Isophorondiisocyanat, Trimethylendiisocyanat, Tetramethylendiisocyanat, Hexamethylendiisocyanat, Dodecamethylendiisocyanat, Cyclohexan-1,4-diisocyanat, 2,4-Hexahydrotoluylendiisocyanat, 2,6-Hexahydrotoluylendiisocyanat und 4,4'-Dicyclohexylmethandiisocyanat.

Bevorzugte polymere Carbodiimide sind Copolycarbodiimide, erhältlich durch Kondensation bzw. Polykondensation von mindestens einem aromatischen Diisocyanat, beispielsweise 2,4-Toluylendiisocyanat, 4,4'-Diphenylmethandiisocyanat oder 1,7-Naphthylendiisocyanat, mit mindestens einem aliphatischen oder cycloaliphatischen Carbodiimid wie beispielsweise Isophorondiisocyanat, Trimethylendiisocyanat, Tetramethylendiisocyanat, Hexamethylendiisocyanat, Dodecamethylendiisocyanat, Cyclohexan-1,4-diisocyanat, 2,4-Hexahydrotoluylendiisocyanat, 2,6-Hexahydrotoluylendiisocyanat und 4,4'-Dicyclohexylmethandiisocyanat.

Ganz besonders bevorzugt sind polymere Carbodiimide, erhältlich durch Polykondensation von m-TMXDI oder p-TMXDI 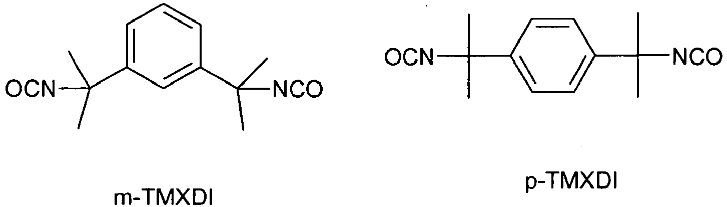 oder Mischungen von m-TMXDI und p-TMXDI mit 2 bis 20, bevorzugt bis 15 und besonders bevorzugt bis 10 -N=C=N-Gruppen pro Mol.

Die vorstehend genannten polymeren Carbodiimide wirken besonders gut in Kombination mit einem oder mehreren Diolen, beispielsweise Ethylenglykol, Diethylenglykol, Triethylenglykol, Tetraethylenglykol, 1,3-Propandiol, 1,4-Butandiol, Propylenglykol, Dipropylenglykol, Tripropylenglykol, Tetrapropylenglykol, Butylenglykol, 1,6-Hexandiol, 1,5-Pentandiol, Polyethylengykol mit einem mittleren Molekulargewicht Mₙ im Bereich von 200 bis 5.000 g/mol, Polypropylenglykol mit einem mittleren Molekulargewicht Mₙ im Bereich von 200 bis 5.000 g/mol, Polytetrahydrofuran mit einem Molekulargewicht Mₙ im Bereich von 200 bis 5.000 g/mol, Ethylenoxid-Propylenoxid-Copolymere, insbesondere Blockcopolymere von Ethylenoxid und Propylenoxid.

Geeignete sind weiterhin aromatische Diole wie beispielsweise Resorcin, Hydrochinon, 4,4'-Diphenyldiol, Hydrochinon-di-(para-hydroxybenzoesäureester), Bisphenol A sowie Alkoxylierungsprodukte, insbesondere Ethoxylierungsprodukte und Propoxylierungsprodukte der vorstehend genannten aromatischen Diole, wie beispielsweise Verbindungen der allgemeinen Formel IV 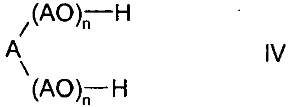 wobei die Variablen wie folgt definiert sind:
- A: ist ein divalenter organischer Rest mit einem bis 40 C-Atomen, bevorzugt 2 bis 30 C-Atomen, vorzugsweise ein organisches Diol, insbesondere ein organischer Rest mit mindestens einem, bevorzugt mindestens zwei Phenylringen, die substituiert sein können, beispielsweise para-O-C₆H₄-O-, para, para'-O-C₆H₄-C₆H₄-O-, para,para'-O-C₆H₄-C(CH₃)₂-C₆H₄-O-,
- AO: wird gewählt aus C₂-C₄-Alkylenoxid, beispielsweise Butylenoxid, insbesondere Ethylenoxid CH₂CH₂O ("EO") und Propylenoxid CH₂C(CH₃)O ("PO")
- n: verschieden oder vorzugsweise gleich und gewählt aus Zahlen im Bereich von null bis 50, bevorzugt 2 bis 20 und besonders bevorzugt 3 bis 15.

Bevorzugt sind Verbindungen der Formel V

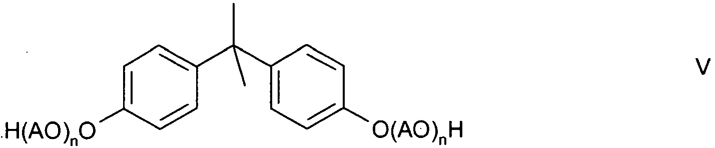

Erfindungsgemäße Druckpasten können einen oder mehrere Emulgatoren enthalten. Geeignete Emulgatoren sind bevorzugt nicht-ionisch. Beispiele für nicht-ionische Emulgatoren sind beispielsweise ein- oder mehrfach alkoxylierte, bevorzugt propoxylierte und insbesondere mehrfach, z. B. 3 bis 100-fach ethoxylierte Fettalkohole, Oxoalkohole und insbesondere Arylpolyglykolether, beispielsweise der Formel VI a bis VI c:

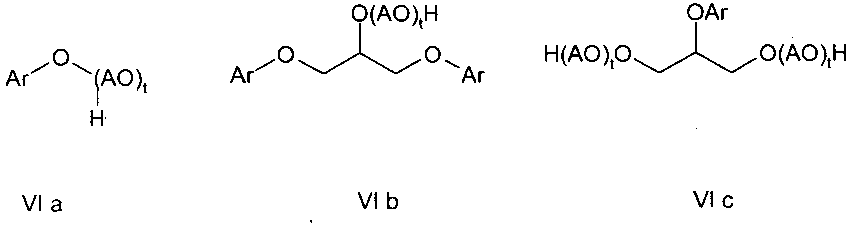

Dabei sind die Variablen wie folgt definiert:
- Ar:: verschieden oder gegebenenfalls gleich, C₆-C₁₄-Aryl, beispielsweise Phenyl, Naphthyl oder Phenanthryl, unsubstituiert oder ein- oder mehrfach substituiert, insbesondere mit C₁-C₄-Alkyl, verzweigt oder unverzweigt, beispielsweise Methyl, Ethyl, n-Propyl, Iso-Propyl, n-Butyl, Iso-Butyl, oder mit Alkylaryl, beispielsweise Styryl; bevorzugte substituierte Phenylreste sind jeweils in 2,6-Position oder in 2,4,6-Position mit C₁-C₄-Alkyl substituiert.
- t: verschieden oder vorzugsweise gleich und gewählt aus Zahlen im Bereich von 1 bis 100, bevorzugt 2 bis 50 und besonders bevorzugt 3 bis 20.

In einer Ausführungsform der vorliegenden Erfindung enthalten erfindungsgemäße wässrige Bindemittel-haltige Formulierungen, insbesondere erfindungsgemäße Druckpasten 0,01 bis 7 Gew.-%, bevorzugt 0,11 bis 4 Gew.-%, besonders bevorzugt 0,5 bis 2 Gew.-% Verbindung der allgemeinen Formel I.

In einer speziellen Ausführungsform der vorliegenden Erfindung enthalten erfindungsgemäße Druckpasten
0,01 bis 7 Gew.-%, bevorzugt 0,11 bis 4 Gew.-%, besonders bevorzugt 0,5 bis 2 Gew.-% an Verbindung der allgemeinen Formel I,
0,0001 bis 15 Gew.-% Pigment,
bis 10 Gew.-%, bevorzugt 0,001 bis 8 Gew.-% Verdickungsmittel,
1 bis 30 Gew.-% bevorzugt 2 bis 20 Gew.-% Bindemittel und
insgesamt 0,1 bis 6 Gew.-%, bevorzugt 0,5 bis 3 Gew.-% an weiteren Zusätzen, wobei Angaben in Gew.-% jeweils auf die gesamte erfindungsgemäßer Druckpaste bezogen sind. Der Rest ist vorzugsweise Wasser.

In einer Ausführungsform der vorliegenden Erfindung weisen erfindungsgemäße wässrige Bindemittel-haltige Formulierungen, insbesondere erfindungsgemäße Druckpasten einen Feststoffgehalt im Bereich von 3 bis 20,5 Gew.-%, bevorzugt von 5 bis 15 Gew.-% auf.

In einer Ausführungsform der vorliegenden Erfindung weisen erfindungsgemäße wässrige Bindemittel-haltige Formulierungen, insbesondere erfindungsgemäße Druckpasten einen pH-Wert im Bereich von 7 bis 11, bevorzugt bis 9 auf.

Erfindungsgemäße Druckpasten eignen sich zum Bedrucken von verschiedensten Substraten, beispielsweise Holz, Papier, Polymerfolien, beispielsweise aus Polyethylen oder Polyester, weiterhin Leder, Kunstleder, Pappe und Kartonagen.

In einer bevorzugten Ausführungsform der vorliegenden Erfindung handelt es sich bei erfindungsgemäßen Druckpasten um Druckpasten für den Textildruck. Der Begriff Textil ist vorstehend definiert. Vorzugsweise handelt es sich bei Textil im Sinne der vorliegenden Erfindung um flächig ausgestaltetes Textil, vorstehend auch flächiges Textil genannt.

Setzt man erfindungsgemäße Druckpasten zum Bedrucken von Substraten, insbesondere von Textil ein, so erhält man fleckenfrei bedruckte Substrate mit vorzüglichem Griff und guten Echtheiten, beispielsweise Reibechten.

Ein weiterer Gegenstand der vorliegenden Erfindung sind Kombinationen von mehreren, beispielsweise mindestens zwei erfindungsgemäßen Druckpasten, die vorzugsweise je ein Farbmittel mit unterschiedlicher Farbe enthalten. Mit erfindungsgemäßen Kombinationen von erfindungsgemäßen Druckpasten lassen sich beispielsweise mehrfarbige Drucke anfertigen.

Ein weiterer Gegenstand der vorliegenden Erfindung ist ein Verfahren zum Behandeln von Substraten, insbesondere von Textil, unter Verwendung von mindestens einer erfindungsgemäßen wässrigen Bindemittel-haltigen Formulierung, im Folgenden auch erfindungsgemäßes Behandlungsverfahren genannt. Einzelheiten zur Durchführung von Ausführungsformen des erfindungsgemäßen Behandlungsverfahrens sind vorstehend genannt.

Ein weiterer Gegenstand ist ein Verfahren zum Bedrucken von Substraten, insbesondere von Textil, unter Verwendung von mindestens einer erfindungsgemäßen Druckpaste. Das erfindungsgemäße Verfahren zum Bedrucken von Substraten wird im Folgenden auch erfindungsgemäßes Druckverfahren genannt.

Zum Zweck des Bedruckens kann man sich an sich bekannter Verfahren bedienen, beispielsweise eines Siebdruckverfahrens.

Eine Ausführungsform des erfindungsgemäßen Druckverfahrens wird im Folgenden beschrieben.

Das erfindungsgemäße Druckverfahren geht aus von Substrat, das unvorbehandelt oder nach an sich bekannten Methoden vorbehandelt sein kann. Beispielsweise können Substrate aus Baumwolle vorbehandelt, insbesondere gebleicht sein.

Danach verdruckt man erfindungsgemäße Druckpaste, beispielsweise mit Hilfe eines Rakels. Man kann großflächig verdrucken oder Substrat mit einem Muster oder mehreren Mustern bedrucken.

In einer Ausführungsform der vorliegenden Erfindung behandelt man nach dem eigentlichen Bedrucken von Substrat mit erfindungsgemäßer Druckpaste thermisch, und zwar in einem oder mehreren Behandlungsschritten. Beispielsweise kann man thermisch trocknen und/oder thermisch fixieren, bevorzugt trocknet man bei Temperaturen von 70 bis 120°C über einen Zeitraum von 30 Sekunden bis 30 Minuten und/oder fixiert, gegebenenfalls anschließend an das Trocknen, bei Temperaturen von 140°C bis 200°C über einen Zeitraum von 30 Sekunden bis 15 Minuten. Dauer und Temperatur der thermischen Behandlung werden dabei jeweils an das bedruckte Substrat angepasst. Als Temperaturen sind vorstehend jeweils die Temperaturen des Heizmittels, beispielsweise des Umluftstroms, genannt.

Nach der thermischen Behandlung kann man noch waschen oder bügeln.

Man erhält bedruckte Substrate, die einerseits besonders wenig oder vorzugsweise keine Flecken aufweisen, andererseits aber einen angenehmen Griff und gute Echtheiten wie beispielsweise Reibechtheiten aufweisen und die ebenfalls Gegenstand der vorliegenden Erfindung sind. Vorzugsweise handelt es sich bei erfindungsgemäßen bedruckten Substraten um bedrucktes Textil. Beispielsweise lassen sich erfindungsgemäße Textilien hervorragend im Bekleidungsbereich und als Fahnen oder Wimpel einsetzen, weiterhin als Dekostoffe im Heimtextilbereich oder im Bereich technischer Textilien.

Ein weiterer Gegenstand der vorliegenden Erfindung ist ein Verfahren zur Herstellung von erfindungsgemäßen wässrigen Bindemittel-haltigen Formulierungen, insbesondere erfindungsgemäße Druckpasten, im Rahmen der vorliegenden Erfindung auch als erfindungsgemäßes Herstellverfahren bezeichnet. Das erfindungsgemäße Herstellverfahren gelingt durch Vermischen, insbesondere Verrühren von
mindestens einer Verbindung der allgemeinen Formel I,
mindestens einem Bindemittel,
gegebenenfalls mindestens einem Farbmittel, bevorzugt mindestens einem Pigment, beispielsweise in Form einer Pigmentzubereitung,
gegebenenfalls mit Verdickungsmittel und gegebenenfalls mit mindestens einem Zusatz
und gegebenenfalls Auffüllen mit Wasser.

Die Reihenfolge der Zugabe der vorstehend genannten Bestandteile von erfindungsgemäßen Druckpasten kann man frei wählen. Wünscht man ein oder mehrere Verdickungsmittel einzusetzen, so ist es bevorzugt, das oder die Verdickungsmittel als letztes oder unmittelbar vor dem Auffüllen mit Wasser zuzugeben.

Das erfindungsgemäße Herstellverfahren kann man in beliebigen Gefäßen durchführen, beispielsweise in Rührgefäßen.

Wünscht man ein oder mehrere Verdickungsmittel einzusetzen, so ist es bevorzugt, mit Hilfe eines Schnellrührers, beispielsweise eines Ultra-Thurrax, zu vermischen.

Die Erfindung wird durch Arbeitsbeispiele erläutert.

Vorbemerkung: Es wurden die folgenden Ausgangssubstanzen eingesetzt: Verbindung der Formel I.1 war hergestellt aus C₁₃/C₁₅-Oxoalkohol (R¹-OH), Ethylenoxid, Propylenoxid (R²= Methyl) und Methanol (R³ = Methyl). Die übrigen Variablen waren wie folgt: x =3, y = 1, a = 1.

Für die Vergleichsbeispiele wurde als Weichmacher jeweils ein 1:1-Gemisch der cis/trans-Isomeren Cyclohexan-1,4-dicarbonsäurediisononylester als V-W.2 eingesetzt.

Folgende Zusätze wurden verwendet:

Emulgator (Z.1):

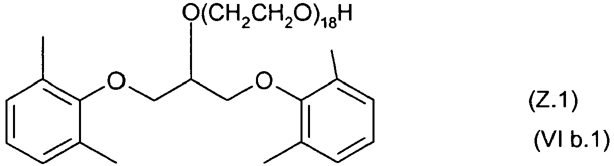

(Z.2): Carbodiimid auf Basis von meta-TMXDI mit einem titrimetrisch ermittelten NCO-Gehalt von 6,7 Gew.-%. Das entspricht etwa 4,2 Carbodiimidgruppen/Molekül.

Verdickungsmittel (Z.3): Copolymer aus Acrylsäure (92 Gew.-%), Acrylamid (7,6 Gew.-%), Methylenbisacrylamid V.1 (0,4 Gew.-%), quantitativ neutralisiert mit Ammoniak (25 Gew.-% in Wasser), Molekulargewicht M_{w} von ca. 150.000g/mol, in einer Wasser-in-Weißöl-Emulsion, Feststoffgehalt 27 %.

Bindemittel (Z.4):
Copolymerdispersion eines statistischen Emulsionscopolymerisats aus 10 Gew.-Teilen Acrylsäure, 30 Gew.-Teilen n-Butylacrylat, 60 Gew.-Teilen Styrol,
Feststoffgehalt 40 Gew.-%, pH-Wert 6,8,

Bindemittel (Z.5):
Copolymerdispersion, pH-Wert 6,6, Feststoffgehalt 40 Gew.-%, eines statistischen Emulsionscopolymerisats von
1 Gew.-Teil N-Methylolacrylamid, 1 Gew.-Teil Acrylsäure, 4 Gew.-Teilen Acrylamid, 26 Gew.-Teilen Styrol, 68 Gew.-Teilen n-Butylacrylat, Angaben in Gew.-Teilen sind bei den Bindemitteln jeweils bezogen auf gesamten Feststoff, mittlerer Partikeldurchmesser (Gewichtsmittel) 172 nm, bestimmt durch Coulter Counter.

Eine Pigmentpräparation wurde wie folgt hergestellt:
In einer Rührwerkskugelmühle des Typs Drais Superflow DCP SF 12 wurden miteinander vermahlen:

| | |
|---|---|
| 2640 g | Pigment Blau 15:3 |
| 460 g | eines Ethoxylierungsprodukts von 1,2-Diethylamin (Molverhältnis Ethylenoxid : 1,2-Diethylamin: 72:1) |
| 600 g | Glycerin |
| 2300 g | destilliertes Wasser |

Das Vermahlen wurde fortgesetzt, bis die Pigmentpartikel einen mittleren Durchmesser von 100 nm aufwiesen. Man erhielt die Pigmentpräparation (P.1).

### I. Herstellung von erfindungsgemäßen Druckpasten

Man verrührte in einem Rührgefäß die Ingredienzien gemäß Tabelle 1, die man in der folgenden Reihenfolge vermischte:

Man legte 200 ml Wasser und gab Emulgator (Z.1) zu. Wenn der pH-Wert unter 8 lag, stellte man einen pH-Wert von 8,5 durch Zugabe von 25 Gew.-% wässrigen Ammoniak ein. Unter Rühren gab man anschließend (Z.2) und Bindemittel (Z.4) bzw. (Z.5) gemäß Tabelle 1 zu. Anschließend gab man unter Rühren Verdickungsmittel (Z.3) und schließlich Pigmentpräparation (P.1) zu. Man füllte mit Wasser auf einen Liter auf und verrührte danach 15 Minuten mit einem Schnellrührer des Typs Ultra-Turrax mit etwa 6000 Umdrehungen/min.

Man erhielt erfindungsgemäße Druckpasten DP.1 bis DP.4 gemäß Tabelle 1 bzw. die entsprechenden Vergleichsdruckpasten V-DP.5 und V-DP.6.

**Tabelle 1: Zusammensetzung der erfindungsgemäßen Druckpasten und Vergleichsdruckpasten**

| Ingredienz [g] | DP.1 | DP.2 | DP.3 | DP.4 | V-DP.5 | V-DP.6 |
|---|---|---|---|---|---|---|
| (Z.1) | 5 | 5 | 5 | 5 | 5 | 5 |
| V-W.1 | - | - | - | - | 6 | 12 |
| Verbindung I.1 | 6 | 12 | 6 | 12 | - | - |
| (Z.2) | 4 | 4 | 4 | 4 | 4 | 4 |
| (Z.3) | 37 | 37 | 37 | 37 | 37 | 37 |
| (Z.4) | 100 | 100 | | | 100 | 100 |
| (Z.5) | | | 100 | 100 | | |
| (P.1) | 10 | 10 | 10 | 10 | 10 | 10 |
| Wasser | Zu 1 l auffüllen | Zu 1 l auffüllen | Zu 1 l auffüllen | Zu 1 l auffüllen | Zu 1 l auffüllen | Zu 1 l auffüllen |

Alle Mengenangaben der Ingredienzien sind in g und beziehen sich auf den jeweiligen Feststoff, lediglich die Angaben für Pigmentpräparation (P.1) sind tel quelle.

### II. Bedrucken von Textil

Man bedruckte als Substrat ein Baumwollgewebe, gebleicht, nicht merzerisiert, Flächengewicht 196 g/m².
Drucken: Rakel 8 mm, Magnetzugstufe 6, Schablonengaze E 55
Thermische Behandlung: 2 Schritte, 1. Schritt: Trocknen: bei 80° C im Trockenschrank Der anschließende 2. Schritt der thermischen Behandlung (Vernetzung) erfolgte jeweils auf einem Spannrahmen mit Heißluft durch fünfminütiges Erhitzen auf 150°C.

Man erhielt die erfindungsgemäßen Baumwollsubstrate BW.1 bis BW.4 bzw. die Vergleichssubstrate V-BW.5 und V-BW.6. Die Anwendung wurde jeweils mehrfach mit frischem Substrat wiederholt. Es wurden für die Vergleichsexperimente einerseits und für die erfindungsgemäßen Experimente andererseits zwei unterschiedliche Trockenschränke verwendet.

Die erfindungsgemäßen bedruckten Baumwollsubstrate BW.1 bis BW.4 waren fleckenfrei, und zwar jeweils bei mikroskopischer Betrachtung (Maßstab 1:75) und bei Betrachtung mit bloßem Auge, während Vergleichssubstrate V-BW.5 und V-BW.6 leichte Flecken zeigten. Die Ergebnisse der übrigen anwendungstechnischen Prüfungen sind Tabelle 2 zu entnehmen.

**Tabelle 2: Anwendungstechnische Prüfung der erfindungsgemäßen Baumwollsubstrate BW.1 bis BW.4 bzw. der Vergleichssubstrate V-BW.5 und V-BW.6**

| Druckpaste | DP.1 | DP.2 | DP.3 | DP.4 | V-DP.5 | V-DP.6 |
|---|---|---|---|---|---|---|
| Bedruckte Baumwolle | BW.1 | BW.2 | BW.3 | BW.4 | V-BW.5 | V-BW.6 |
| Reibechtheit nass | 3-4 | 3-4 | 3-4 | 3-4 | 3-4 | 3-4 |
| Reibechtheit trocken | 4-5 | 4-5 | 4-5 | 4-5 | 4-5 | 4-5 |
| Griff | Sehr weich | Sehr weich | Sehr weich | Sehr weich | Weich | Weich |

Die Reibechtheiten (nass und trocken) wurden jeweils nach DIN EN ISO 105 - X12 bestimmt. Der Griff wurde jeweils durch Probandenteams ermittelt.

## Patentansprüche

1. Verwendung von Verbindungen der allgemeinen Formel I 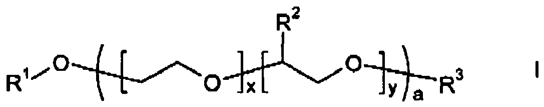 in wässrigen Bindemittel-haltigen Formulierungen, gewählt aus Druckpasten, die ein oder mehrere Pigmente enthalten, Beschichtungsmitteln und Färbeflotten, wobei die Variablen wie folgt definiert sind:
R¹ gewählt aus C₁-C₂₀-Alkyl, gradkettig oder verzweigt, oder CO-C₁-C₁₉-Alkyl oder CO-C₂-C₁₉-Alkenyl, gradkettig oder verzweigt,
R² gleich oder verschieden und gewählt aus C₁-C₃-Alkyl,
R³ gewählt aus C₁-C₂₀-Alkyl, gradkettig oder verzweigt, oder CO-C₁-C₁₉-Alkyl oder CO-C₂-C₁₉-Alkenyl, gradkettig oder verzweigt,
x eine Zahl im Bereich von 3 bis 20,
y eine Zahl im Bereich von 1 bis 20,
a eine Zahl im Bereich von 1 bis 3.

2. Verwendung nach Anspruch 1, **dadurch gekennzeichnet, dass** in Verbindungen der allgemeinen Formel I die Variablen wie folgt gewählt werden:
R¹ gewählt aus C₁₀-C₁₈-Alkyl, gradkettig oder verzweigt,
R² gleich oder verschieden und gewählt aus C₁-C₃-Alkyl,
R³ gewählt aus C₁-C₈-Alkyl, gradkettig oder verzweigt.

3. Verwendung nach einem der Ansprüche 1 oder 2, **dadurch gekennzeichnet, dass** Bindemittel gewählt werden aus Polyacrylaten und Polyurethanen.

4. Verwendung nach einem der Ansprüche 1 bis 3, **dadurch gekennzeichnet, dass** es sich bei Druckpasten um solche handelt, die frei sind von Alkylestern von Dicarbonsäuren.

5. Wässrige Bindemittel-haltige Formulierungen, enthaltend eine oder mehrere Verbindungen der allgemeinen Formel I 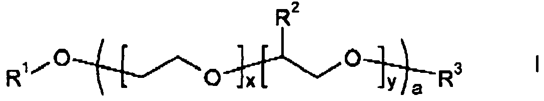 wobei die Variablen wie folgt definiert sind:
R¹ gewählt aus C₁-C₂₀-Alkyl, gradkettig oder verzweigt, unsubstituiert oder ein- oder mehrfach substituiert mit Hydroxylgruppen oder Ketogruppen, oder CO-C₁-C₁₉-Alkyl oder CO-C₂-C₁₉-Alkenyl, gradkettig oder verzweigt,
R² gleich oder verschieden und gewählt aus C₁-C₁₃-Alkyl,
R³ gewählt aus C₁-C₂₀-Alkyl, gradkettig oder verzweigt, oder CO-C₁-C₁₉-Alkyl oder CO-C₂-C₁₉-Alkenyl, gradkettig oder verzweigt,
x eine Zahl im Bereich von 3 bis 20,
y eine Zahl im Bereich von 1 bis 20,
a eine Zahl im Bereich von 1 bis 3,
und mindestens ein Pigment.

6. Wässrige Bindemittel-haltige Formulierung nach Anspruch 5, **dadurch gekennzeichnet, dass** in Verbindungen der allgemeinen Formel I die Variablen wie folgt gewählt werden:
R¹ gewählt aus C₁₀-C₁₈-Alkyl, gradkettig oder verzweigt,
R² gleich oder verschieden und gewählt aus C₁-C₃-Alkyl,
R³ gewählt aus C₁-C₈-Alkyl, gradkettig oder verzweigt.

7. Wässrige Bindemittel-haltige Formulierung nach Anspruch 5 oder 6, gewählt aus Druckpasten, Beschichtungsmitteln und Färbeflotten.

8. Wässrige Bindemittel-haltige Formulierung nach einem der Ansprüche 5 bis 7, **dadurch gekennzeichnet, dass** sie mindestens ein Bindemittel enthält, gewählt aus Polyacrylaten und Polyurethanen.

9. Wässrige Bindemittel-haltige Formulierung nach einem der Ansprüche 5 bis 8, **dadurch gekennzeichnet, dass** sie frei ist von Alkylestern von Dicarbonsäuren.

10. Kombination von mindestens zwei wässrigen Bindemittel-haltigen Formulierungen nach einem der Ansprüche 5 bis 9.

11. Verfahren zum Behandeln von Substraten unter Verwendung von mindestens einer wässrigen Bindemittel-haltigen Formulierung nach einem der Ansprüche 5 bis 9 oder einer Kombination von mindestens zwei wässrige Bindemittel-haltigen Formulierungen nach Anspruch 10.

12. Verfahren nach Anspruch 11, **dadurch gekennzeichnet, dass** es sich bei Substraten um Textil handelt.

13. Substrate, behandelt nach einem Verfahren nach Anspruch 11 oder 12.

14. Verfahren zur Herstellung von wässrigen Bindemittel-haltigen Formulierungen nach einem der Ansprüche 5 bis 9 durch Vermischen von mindestens einer Verbindung der allgemeinen Formel I mit Wasser, mindestens einem Bindemittel und mindestens einem Pigment.

## Claims

1. The use of compounds of the general formula I 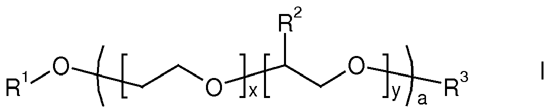 in aqueous binder-containing formulations selected from print pastes which comprise one or more pigments, coating compositions and dyeing liquors, wherein the variables are each defined as follows:
R¹ is selected from C₁-C₂₀-alkyl, straight chain or branched, or CO-C₁-C₁₉-alkyl or CO-C₂-C₁₉-alkenyl, straight chain or branched,
R² in each occurrence is the same or different and selected from C₁-C₃-alkyl,
R³ is selected from C₁-C₂₀-alkyl, straight chain or branched, or CO-C₁-C₁₉-alkyl or CO-C₂-C₁₉-alkenyl, straight chain or branched,
x is from 3 to 20,
y is from 1 to 20,
a is from 1 to 3.

2. The use according to claim 1, wherein the variables in compounds of the general formula I are each selected as follows:
R¹ is selected from C₁₀-C₁₈-alkyl, straight chain or branched,
R² in each occurrence is the same or different and selected from C₁-C₃-alkyl,
R³ is selected from C₁-C₈-alkyl, straight chain or branched.

3. The use according to either of the claims 1 and 2 wherein binders are selected from polyacrylates and polyurethanes.

4. The use according to any one of the claims 1 to 3 wherein print pastes are free of alkyl esters of dicarboxylic acids.

5. An aqueous binder-containing formulation comprising one or more compounds of the general formula I 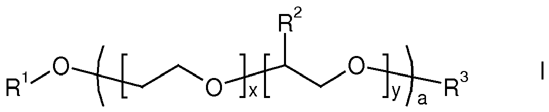 wherein the variables are each defined as follows:
R¹ is selected from C₁-C₂₀-alkyl, straight chain or branched, unsubstituted or mono- or polysubstituted with hydroxyl groups or keto groups, or CO-C₁-C₁₉-alkyl or CO-C₂-C₁₉-alkenyl, straight chain or branched,
R² in each occurrence is the same or different and selected from C₁-C₃-alkyl,
R³ is selected from C₁-C₂₀-alkyl, straight chain or branched, or CO-C₁-C₁₉-alkyl or CO-C₂-C₁₉-alkenyl, straight chain or branched,
x is from 3 to 20,
y is from 1 to 20,
a is from 1 to 3,
and at least one pigment.

6. The aqueous binder-containing formulation according to claim 5 wherein the variables in compounds of the general formula I are each selected as follows:
R¹ is selected from C₁₀-C₁₈-alkyl, straight chain or branched,
R² in each occurrence is the same or different and selected from C₁-C₃-alkyl,
R³ is selected from C₁-C₈-alkyl, straight chain or branched.

7. The aqueous binder-containing formulation according to claim 5 or 6 selected from print pastes, coating compositions and dyeing liquors.

8. The aqueous binder-containing formulation according to any one of the claims 5 to 7 comprising at least one binder selected from polyacrylates and polyurethanes.

9. The aqueous binder-containing formulation according to any one of the claims 5 to 8 which is free of alkyl esters of dicarboxylic acids.

10. A combination of at least two aqueous binder-containing formulations according to any one of the claims 5 to 9.

11. A process for treating substrates using at least one aqueous binder-containing formulation according to any one of the claims 5 to 9 or a combination of at least two aqueous binder-containing formulations according to claim 10.

12. The process according to claim 11 wherein substrates comprise textile.

13. Substrates treated by a process according to claim 11 or 12.

14. The process for producing aqueous binder-containing formulations according to any one of the claims 5 to 9 by mixing at least one compound of the general formula I with water, at least one binder and at least one pigment.

## Revendications

1. Utilisation de composés de formule générale I 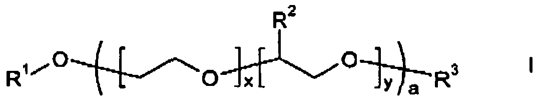 dans des formulations aqueuses contenant un/des liant(s), choisies parmi les pâtes d'imprimerie qui contiennent un ou plusieurs pigments, les agents de revêtement et les bains de teinture, les variables étant définies comme suit :
R¹ choisi parmi C₁-C₂₀-alkyle, linéaire ou ramifié, ou CO-C₁-C₁₉-alkyle ou CO-C₂-C₁₉-alcényle, linéaire ou ramifié,
R² sont identiques ou différents et choisis parmi C₁-C₃-alkyle,
R³ choisi parmi C₁-C₂₀-alkyle, linéaire ou ramifié, ou CO-C₁-C₁₉-alkyle ou CO-C₂-C₁₉-alcényle, linéaire ou ramifié,
x un nombre de la plage de 3 à 20,
y un nombre de la plage de 1 à 20,
a un nombre de la plage de 1 à 3.

2. Utilisation selon la revendication 1, **caractérisée en ce que** dans les composés de formule générale I, les variables sont choisies comme suit :
R¹ choisi parmi C₁₀-C₁₈-alkyle, linéaire ou ramifié,
R² sont identiques ou différents et choisis parmi C₁-C₃-alkyle,
R³ choisi parmi C₁-C₈-alkyle, linéaire ou ramifié.

3. Utilisation selon l'une quelconque des revendications 1 ou 2, **caractérisée en ce que** les liants sont choisis parmi les polyacrylates et les polyuréthanes.

4. Utilisation selon l'une quelconque des revendications 1 à 3, **caractérisée en ce qu'**il s'agit, pour les pâtes d'imprimerie de pâtes qui sont exemptes d'esters alkyliques d'acides dicarboxyliques.

5. Formulations aqueuses contenant un/des liant(s), contenant un ou plusieurs composés de formule générale I 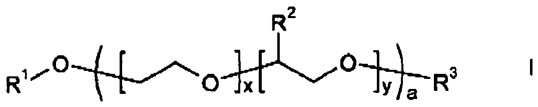 les variables étant définies comme suit :
R¹ choisi parmi C₁-C₂₀-alkyle, linéaire ou ramifié, non substitué ou monosubstitué ou polysubstitué par des groupes hydroxyle ou des groupes céto, ou CO-C₁-C₁₉-alkyle ou CO-C₂-C₁₉-alcényle, linéaire ou ramifié,
R² sont identiques ou différents et choisis parmi C₁-C₃-alkyle,
R³ choisi parmi C₁-C₂₀-alkyle, linéaire ou ramifié, ou CO-C₁-C₁₉-alkyle ou CO-C₂-C₁₉-alcényle, linéaire ou ramifié,
x un nombre de la plage de 3 à 20,
y un nombre de la plage de 1 à 20,
a un nombre de la plage de 1 à 3,
et au moins un pigment.

6. Formulation aqueuse contenant un/des liant(s) selon la revendication 5, **caractérisée en ce que** dans les composés de formule générale I, les variables sont choisies comme suit :
R¹ choisi parmi C₁₀-C₁₈-alkyle, linéaire ou ramifié,
R² sont identiques ou différents et choisis parmi C₁-C₃-alkyle,
R³ choisi parmi C₁-C₈-alkyle, linéaire ou ramifié.

7. Formulation aqueuse contenant un/des liant(s) selon la revendication 5 ou 6, choisie parmi les pâtes d'imprimerie, les agents de revêtement et les bains de teinture

8. Formulation aqueuse contenant un/des liant(s) selon l'une quelconque des revendications 5 à 7, **caractérisée en ce qu'**elle contient au moins un liant choisi parmi les polyacrylates et les polyuréthanes.

9. Formulation aqueuse contenant un/des liant(s) selon l'une quelconque des revendications 5 à 8, **caractérisée en ce qu'**elle est exempte d'esters alkyliques d'acides dicarboxyliques.

10. Combinaison d'au moins deux formulations aqueuses contenant un/des liant(s) selon l'une quelconque des revendications 5 à 9.

11. Procédé pour le traitement de substrats en utilisant au moins une formulation aqueuse contenant un/des liant(s) selon l'une quelconque des revendications 5 à 9 ou une combinaison d'au moins deux formulations aqueuses contenant un/des liant(s) selon la revendication 10.

12. Procédé selon la revendication 11, **caractérisé en ce qu'**il s'agit, pour les substrats, de textile.

13. Substrats, traités selon un procédé selon la revendication 11 ou 12.

14. Procédé pour la préparation de formulations aqueuses contenant un/des liant(s) selon l'une quelconque des revendications 5 à 9 par mélange d'au moins un composé de formule générale I avec de l'eau, au moins un liant et au moins un pigment.
